(19) **Europäisches Patentamt / European Patent Office / Office européen des brevets**

(11) **EP 4 730 435 A1**

(12) **EUROPEAN PATENT APPLICATION**

(43) Date of publication:
**22.04.2026 Bulletin 2026/17**

(21) Application number: **25205889.6**

(22) Date of filing: **30.09.2025**

(51) International Patent Classification (IPC):
**H01M 4/525** $^{(2010.01)}$    **H01M 4/131** $^{(2010.01)}$
**H01M 4/36** $^{(2006.01)}$

(52) Cooperative Patent Classification (CPC):
**H01M 4/525;** H01M 4/131; H01M 4/364;
H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.10.2024 KR 20240142194**

(71) Applicant: **SAMSUNG SDI CO., LTD.**
**Yongin-si, Gyeonggi-do 17084 (KR)**

(72) Inventors:
• **DOO, Sungwook**
**17084 Yongin-si (KR)**

• **KIM, Young-Ki**
**17084 Yongin-si (KR)**
• **CHOI, Aram**
**17084 Yongin-si (KR)**
• **KIM, Sangmi**
**17084 Yongin-si (KR)**
• **KANG, Gwiwoon**
**17084 Yongin-si (KR)**
• **KANG, Minchul**
**17084 Yongin-si (KR)**
• **LEE, Soonrewl**
**17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, METHOD OF MANUFACTURING THE SAME, AND RECHARGEABLE LITHIUM BATTERY INCLUDING THE SAME**

(57)     Positive electrode active materials, their manufacturing methods, and rechargeable lithium batteries including the same are provided. The positive electrode active material comprises a first particle that comprises a plurality of primary particles and a first coating part on an interface between the primary particles. The primary particles comprise a compound represented by Chemical Formula 1.
The first coating part comprises lithium metal phosphate.

Chemical Formula 1     $Li_{a1}Fe_{x1}Mny_1B^1{}_{z1}PO_{4-c1}$

In Chemical Formula 1, the subscripts satisfy the relationship of $0.8 < a1 \leq 1.2$, $0.7 \leq x1 \leq 1.0$, $0 \leq y1 \leq 0.3$, $0 \leq z1 \leq 0.05$, $0 \leq c1 \leq 0.05$, and $0.99 \leq x1+y1+z1 \leq 1.01$, and $B^1$ is at least one element selected from among Ti, Mg, V, and Nb.

**EP 4 730 435 A1**

# FIG. 6

**Description**

**BACKGROUND**

**1. Field**

One or more embodiments of the present disclosure relate to a positive electrode active material for a rechargeable lithium battery, a method of manufacturing the same, and a rechargeable lithium battery including the same, and for example, relate to a positive electrode active material including an olivine-based lithium compound for a rechargeable lithium battery, a method of manufacturing the same, and a rechargeable lithium battery including the same.

**2. Description of the Related Art**

Recently, with the rapid spread and popularization of battery utilizing electronic devices (such as mobile phones and/or laptop computers) and/or electric vehicles, there is a rapidly increasing demand for rechargeable batteries with high energy density and high capacity. Therefore, intensive research has been conducted to improve performance of such rechargeable batteries, such as rechargeable lithium batteries.

A rechargeable lithium battery includes a positive electrode, a negative electrode, and an electrolyte. Each of the positive electrode and the negative electrode includes an active material that is capable of intercalation and deintercalation of lithium ions. Electrical energy is generated by oxidation and reduction reactions when lithium ions are intercalated and deintercalated. For example, the electrical energy is generated when lithium ions are intercalated into the positive electrode and/or deintercalated from the negative electrode during the discharge process.

**SUMMARY**

One or more aspects of embodiments of the present disclosure are directed toward a positive electrode active material with excellent or suitable high-voltage and high-temperature performance.

One or more aspects of embodiments of the present disclosure are directed toward a rechargeable lithium battery with excellent or suitable high-temperature lifespan characteristics and superior high-temperature storage properties.

Additional aspects will be set forth in part in the description which follows and, in part, will be apparent from the description, or may be learned by practice of the presented embodiments of the disclosure.

According to one or more embodiments of the present disclosure, a positive electrode active material may include: a first particle that includes a plurality of primary particles and a first coating part on an interface between the primary particles.

The plurality of primary particles may include a compound represented by Chemical Formula 1.

The first coating part may include lithium metal phosphate.

**Chemical Formula 1** $\quad\quad\quad$ $Li_{a1}Fe_{x1}Mn_{y1}B^1_{z1}PO_{4-c1}$

In Chemical Formula 1, the subscripts may satisfy the relationship of $0.8 < a1 \leq 1.2$, $0.7 \leq x1 \leq 1.0$, $0 \leq y1 \leq 0.3$, $0 \leq z1 \leq 0.05$, $0 \leq c1 \leq 0.05$, and $0.99 \leq x1+y1+z1 \leq 1.01$, and $B^1$ may be at least one element selected from among titanium (Ti), magnesium (Mg), vanadium (V), and niobium (Nb).

According to one or more embodiments of the present disclosure, a method of manufacturing a positive electrode active material may include: preparing a first preliminary particle that includes a compound represented by Chemical Formula 1; crushing the first preliminary particle; mixing the crushed first preliminary particle and a coating material with each other to form a mixture, wherein the coating material includes a cobalt source; drying the mixture; and performing calcination on the mixture.

According to one or more embodiments of the present disclosure, a positive electrode for a rechargeable lithium battery may include: a positive electrode current collector; and a positive electrode active material layer on the positive electrode current collector. The positive electrode active material layer may include the positive electrode active material (e.g., the described positive electrode active material), a conductive material, and a binder.

At least some of the above and other features of the invention are set out in the claims.

**BRIEF DESCRIPTION OF DRAWINGS**

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.

FIG. 1 illustrates a simplified conceptual diagram showing a rechargeable lithium battery according to one or more embodiments of the present disclosure.

FIGS. 2 - 5 each illustrate a simplified diagram showing a rechargeable lithium battery according to one or more embodiments of the present disclosure.

FIG. 6 illustrates an enlarged view showing a positive electrode active material layer of a rechargeable lithium battery according to one or more embodiments of the present disclosure.

FIG. 7 illustrates an enlarged view partially showing a positive electrode active material according to one or more embodiments of the present disclosure.

FIG. 8 illustrates an enlarged view showing a positive electrode active material layer of a rechargeable lithium battery according to one or more embodiments of the present disclosure.

FIG. 9 illustrates a flow chart showing a method of manufacturing a positive electrode active material according to one or more embodiments of the present disclosure.

## DETAILED DESCRIPTION

In order to sufficiently understand the configurations and effects of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to illustrate the present disclosure and let those skilled in the art fully know the scope of the present disclosure.

In this disclosure, it will be understood that, if (e.g., when) an element is referred to as being on another element, the element may be directly on the other element or one or more intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the disclosure, and duplicative descriptions thereof may not be provided for conciseness.

Unless otherwise specially noted in this disclosure, the expression of singular form may include the expression of plural form. For example, the singular forms "a," "an," and "the" are intended to include the plural forms as well, unless the context clearly indicates otherwise. In addition, unless otherwise specially noted, the phrase "A or B" or "A and/or B" or "A/B" may indicate "A but not B", "B but not A", and "A and B". The terms "comprise(s)/include(s)/have(has)" and/or "comprising/including/having" used in this description do not exclude the presence or addition of one or more other components. Additionally, the terms "comprise(s)/comprising," "include(s)/including," "has(have)/having", or other similar terms include or support the terms "consisting of" and "consisting essentially of," indicating the presence of stated features, numbers, steps, operations, elements, parts, and/or components, without or essentially without the presence of other features, numbers, steps, operations, elements, parts, components, and/or groups thereof. Further, the utilization of "may" when describing embodiments of the present disclosure refers to "one or more embodiments of the present disclosure".

In this disclosure, the term "combination thereof" may refer to a mixture, a stack, a composite, a copolymer, an alloy, a blend, or a reaction product of the constituents.

Unless otherwise especially defined in this disclosure, a particle diameter/size may be an average particle diameter/size. In addition, a particle diameter/size may indicate an average diameter/size ($D_{50}$) of particles having a cumulative volume of 50 vol% in a particle size distribution. In other words, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. Further, D90 refers to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size. D10 refers to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size. The average particle diameter/size ($D_{50}$) may be measured by a method widely suitable to those skilled in the art, for example, by a particle size analyzer, for example, HORIBA, LA-950 laser particle size analyzer, or by using a transmission electron microscope (TEM) image, or a scanning electron microscope (SEM) image. In one or more embodiments, a dynamic light-scattering measurement device is used to perform a data analysis, the number of particles is counted for each particle size range, and then from this, an average particle diameter/size ($D_{50}$) value may be obtained through a calculation. In one or more embodiments, a laser scattering method may be utilized to measure the average particle diameter/size ($D_{50}$). In the laser scattering method, target particles are dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter/size ($D_{50}$) is calculated in the 50% standard of particle diameter distribution in the measurement device. In the present disclosure, when particles are spherical, "diameter/size" indicates an average particle diameter/size, and when the particles are non-spherical, the "diameter/size" indicates an average major axis length of particles.

In this disclosure, the term "single particle" may refer to that one single particle is present alone without a grain boundary thereinside and is a monolithic structure in which particles are not aggregated (e.g., agglomerated) together with one another but present as an independent phase in terms of morphology, and thus may be expressed as a single crystal particle. In one or more embodiments, the single particle may be a particle containing several crystals. The single particle may be provided as a single isolated form, or may be present in which less than 10 single particles are adhered to or loosely attached to each other.

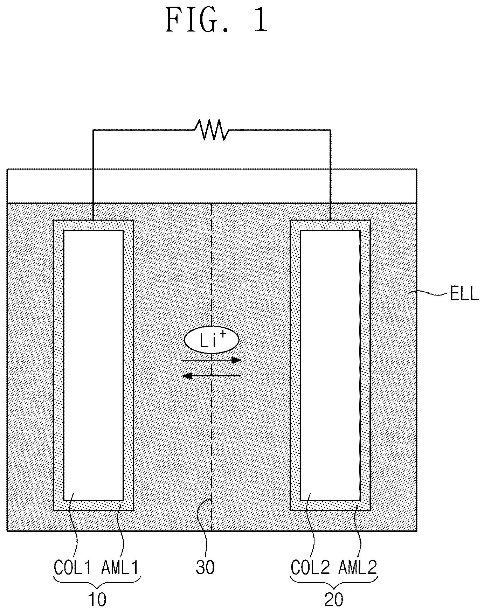

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. For example, the positive electrode 10, the negative electrode 20, and the separator 30 may be impregnated in the electrolyte ELL.

The electrolyte ELL may be a medium through which lithium ions are transferred between the positive electrode 10 and the negative electrode 20. In the electrolyte ELL, the lithium ions may move through the separator 30 toward the positive electrode 10 or the negative electrode 20.

**Positive Electrode**

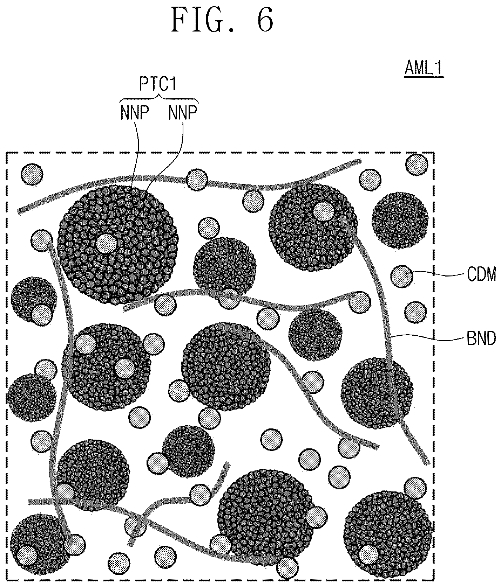

The positive electrode 10 for the rechargeable lithium battery may include a current collector COL1 and a positive electrode active material layer AML1 on (e.g., formed on) the current collector COL1. The positive electrode active material layer AML1 may include a positive electrode active material (e.g., in a form of particles) and may further include a binder and/or a conductive material (e.g., an electron conductor). The positive electrode active material layer AML1 according to one or more embodiments of the present disclosure will be further discussed in more detail with reference to FIG. 6. In one or more embodiments, aluminium (Al) may be used as the current collector COL1, but embodiments of the present disclosure are not limited thereto.

**Negative Electrode**

The negative electrode 20 for the rechargeable lithium battery may include a current collector COL2 and a negative electrode active material layer AML2 positioned on the current collector COL2. The negative electrode active material layer AML2 may include a negative electrode active material (e.g., in a form of particles) and may further include a binder and/or a conductive material (e.g., an electron conductor).

For example, in one or more embodiments, the negative electrode active material layer AML2 may include the negative electrode active material of about 90 wt% to about 99 wt%, the binder of about 0.5 wt% to about 5 wt%, and the conductive material of about 0 wt% to about 5 wt%, based on 100 wt% of a total weight of the negative electrode active material layer.

The binder may serve to improve attachment of negative electrode active material particles to each other and also to improve attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

When an aqueous binder is used as the binder of the negative electrode, a cellulose-based compound capable of providing viscosity may further be included. The cellulose-based compound may include one or more selected from among carboxymethyl cellulose, hydroxypropylmethyl cellulose, methyl cellulose, and alkali metal salts thereof. The alkali metal may include sodium (Na), potassium (K), or lithium (Li).

The dry binder may include a fibrillizable polymer material, for example, polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electron conductor) may be used to provide the electrode with conductivity, and any suitable conductive material that does not cause a chemical change in a battery may be used as the conductive material. For example, the conductive material may include a carbon-based material such as natural graphite, artificial graphite, carbon black, acetylene black, Ketjen black, carbon fiber, carbon nano-fiber, and/or carbon nano-tube; a metal-based material in the form of a metal powder or a metal fiber including one or more selected from among copper, nickel, aluminium, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that can reversibly intercalate and deintercalate lithium ions, lithium metal, a lithium metal alloy, a material that can dope and de-dope lithium, and/or transition metal oxide.

The material that can reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as non-shaped (e.g., irregularly shaped), sheet-shaped, flake-shaped, sphere-shaped, or fiber-shaped natural graphite and/or artificial graphite, and the amorphous carbon may include soft carbon, hard carbon, mesophase pitch carbon, and/or calcined coke.

The lithium metal alloy may include an alloy of lithium and a metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn) (e.g. sodium (Na), potassium (K), rubidium (Rb), cesium (Cs), beryllium (Be), magnesium (Mg), calcium (Ca), strontium (Sr), silicon (Si), antimony (Sb), lead (Pb), indium (In), zinc (Zn), barium (Ba), germanium (Ge), aluminium (Al), and tin (Sn)).

The material that can dope and de-dope lithium may include a Si-based negative electrode active material or a Sn-based negative electrode active material. The Si-based negative electrode active material may include silicon, a silicon-carbon composite, $SiO_x$ (where $0<x\leq2$), a Si-Q alloy (where Q is an alkali metal, an alkaline earth metal, a Group 13 element, a Group 14 element (except for Si), a Group 15 element, a Group 16 element, a transition metal, a rare-earth element, and/or a (e.g., any suitable) combination thereof), and/or a (e.g., any suitable) combination thereof. The Sn-based negative electrode active material may include Sn, $SnO_k$ ($0<k\leq2$) (e.g., $SnO_2$), a Sn-based alloy, and/or a (e.g., any suitable) combination thereof.

The silicon-carbon composite (e.g., in a form of particles) may be a composite of silicon and amorphous carbon. According to one or more embodiments, the silicon-carbon composite may have a structure in which the amorphous carbon is coated on a surface of the silicon particle. For example, in one or more embodiments, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may each be coated with the amorphous carbon. The secondary particles may be present dispersed in an amorphous carbon matrix.

In one or more embodiments, the silicon-carbon composite may further include crystalline carbon. For example, the silicon-carbon composite may include a core including crystalline carbon and silicon particles and may also include an amorphous carbon coating layer positioned on a surface of the core.

In one or more embodiments, the Si-based negative electrode active material and/or the Sn-based negative electrode active material may be used in combination with a carbon-based negative electrode active material.

**Separator**

Based on a type (kind) of the rechargeable lithium battery, the separator 30 may be present between positive electrode 10 and the negative electrode 20. The separator 30 may include one or more selected from among polyethylene, polypropylene, and polyvinylidene fluoride, or may have a multi-layered separator thereof such as a polyethylene/polypropylene bi-layered separator, a polyethylene/polypropylene/polyethylene tri-layered separator, or a polypropylene/polyethylene/polypropylene tri-layered separator.

The separator 30 may include a porous substrate and a coating layer positioned on a surface (e.g., one surface or two opposite surfaces) of the porous substrate. The coating layer includes an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, glass fiber, and polytetrafluoroethylene (e.g., Teflon™), or may be a copolymer or a mixture including two or more of the materials mentioned above.

The organic material may include a polyvinylidenefluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but embodiments of the present disclosure are not limited thereto.

In one or more embodiments, the organic material and the inorganic material may be present mixed in one coating layer or may be present as a stack of a coating layer including the organic material and a coating layer including the inorganic material.

## Electrolyte

The electrolyte ELL for the rechargeable lithium battery may include a non-aqueous organic solvent and a lithium salt.

The non-aqueous organic solvent may serve as a medium for transmitting ions that participate in an electrochemical reaction of the battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol The aprotic solvent may include nitriles such as R-CN (where R is a hydrocarbon group having a C2 to C20 linear, branched, or cyclic structure and may include a double bond, an aromatic ring, and/or an ether group); amides such as dimethylformamide; dioxolanes such as 1,3-dioxolane and/or 1,4-dioxolane; and/or sulfolanes.

The non-aqueous organic solvent may be used alone or in a mixture of two or more solvents.

In addition, if (e.g., when) a carbonate-based solvent is used, a cyclic carbonate and a linear carbonate may be mixed and used, and the cyclic carbonate and the linear carbonate may be mixed in a volume ratio of about 1:1 to about 1:9.

The lithium salt may be a material that is dissolved in the non-aqueous organic solvent to serve as a supply source of lithium ions in the rechargeable lithium battery and plays a role in enabling a basic operation of the rechargeable lithium battery and in promoting the movement of lithium ions between the positive electrode and the negative electrode. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluorobis(oxalato)borate (LiDFOB), lithium difluorobis(oxalato)phosphate (LiDFBOP), and lithium bis(oxalato)borate (LiBOB).

## Rechargeable Lithium Battery

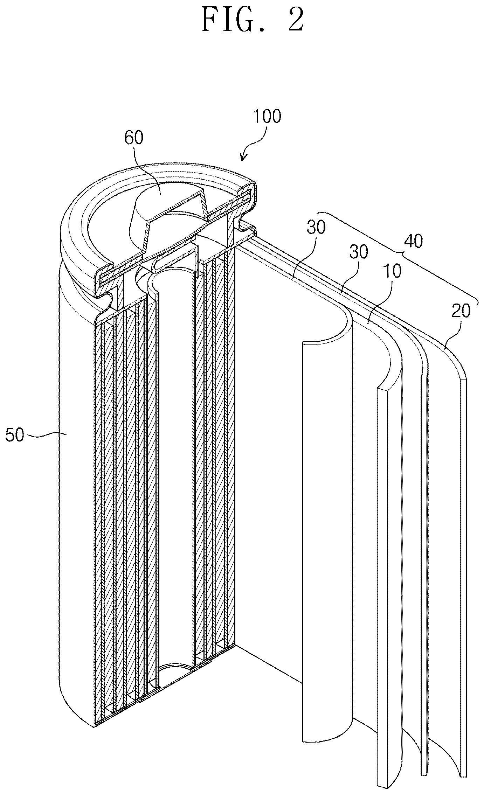

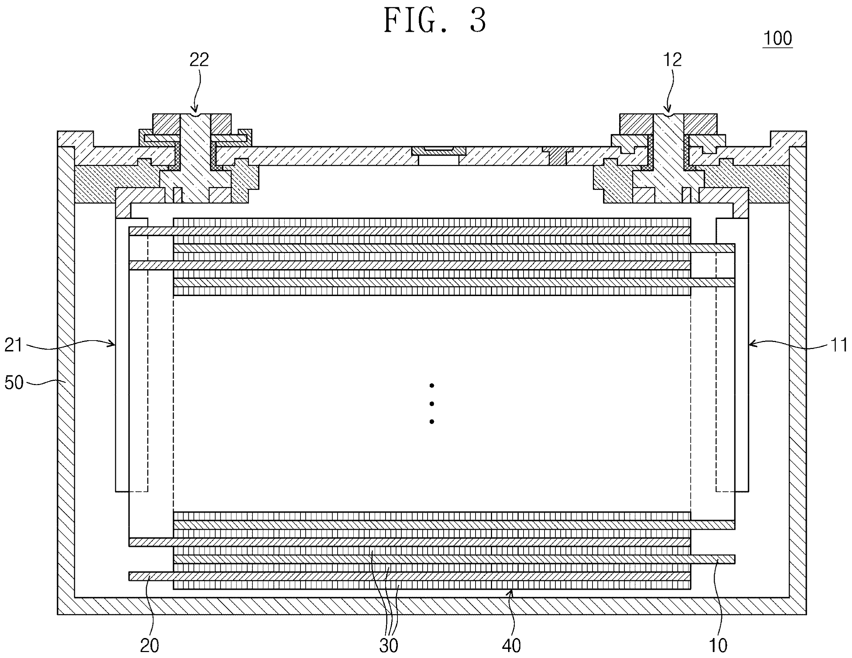

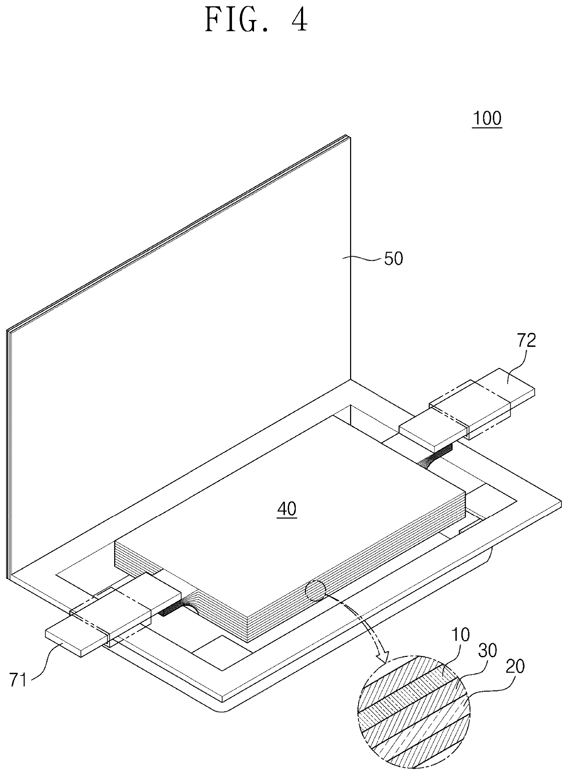

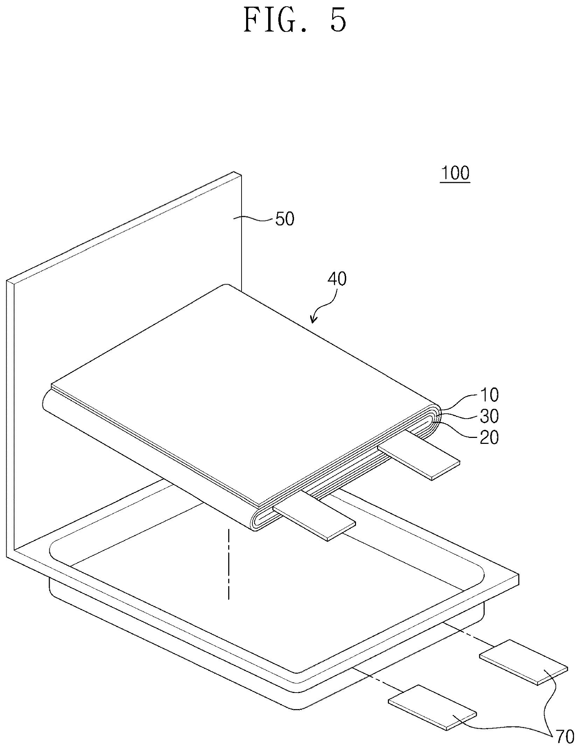

Based on a shape of a rechargeable lithium battery, the rechargeable lithium battery may be classified into a cylindrical, a prismatic, a pouch, or a coin type (kind) battery. FIGS. 2 to 5 each illustrate a simplified diagram showing a rechargeable lithium battery according to one or more embodiments of the present disclosure, with FIG. 2 showing a cylindrical battery, FIG. 3 showing a prismatic battery, and FIGS. 4 and 5 each showing a pouch-type (kind) battery. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. In one or more embodiments, the rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. In one or more embodiments, as shown in FIGS. 4 and 5, the rechargeable lithium battery 100 may include an electrode tab 70, or a positive electrode tab 71 and a negative electrode tab 72, serving as an electrical path for externally inducing a current generated in the electrode assembly 40.

The rechargeable lithium battery according to one or more embodiments of the present disclosure may be applied to automotive vehicles, mobile phones, and/or any other electrical devices, but embodiments of the present disclosure are not limited thereto.

FIG. 6 illustrates an enlarged view showing the positive electrode active material layer AML1 of a rechargeable lithium battery according to one or more embodiments of the present disclosure. Referring to FIG. 6, the positive electrode active material layer AML1 may include a first particle PTC1, a conductive material CDM, and a binder BND. A plurality of first particles PTC1 may constitute a positive electrode active material according to one or more embodiments of the present disclosure.

An amount of the positive electrode active material in the positive electrode active material layer AML1 may range from about 90 wt% to about 99.5 wt% relative to a total weight of 100 wt% of the positive electrode active material layer AML1. Amounts of the binder BND and the conductive material CDM may each be about 0.5 wt% to about 5 wt% relative to the total weight of 100 wt% of the positive electrode active material layer AML1.

The binder BND may combine the first particle PTC1 and the conductive material CDM to each other. For example, the binder BND may include at least one selected from among polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material CDM may be used to improve conductivity (e.g., electrical conductivity) of the positive electrode active material layer AML1. Any conductive material that does not cause chemical changes of the positive electrode active material layer AML1 may be used without limitation as the conductive material CDM. For example, the conductive material CDM may include a carbon-based material such as natural graphite, artificial graphite, carbon black, acetylene black, Ketjen black, carbon fiber, carbon nano-fiber, and/or carbon nano-tube; a metal-based material in the form of a metal powder or a metal fiber including one or more selected from among copper, nickel, aluminium, and silver; a conductive polymer such as a polyphenylene derivative; and/or a (e.g., any suitable) mixture thereof.

The first particle PTC1 will be further discussed in more detail below.

## First Particle

The first particle PTC1 may include an olivine-based lithium compound represented by Chemical Formula 1.

**Chemical Formula 1** $\qquad Li_{a1}Fe_{x1}Mn_{y1}B^1_{z1}PO_{4-c1}$

In Chemical Formula 1, the subscripts a1, x1, y1, z1, and c1 may satisfy the relationship of $0.8 < a1 \leq 1.2$, $0.7 \leq x1 \leq 1.0$, $0 \leq y1 \leq 0.3$, $0 \leq z1 \leq 0.05$, $0 \leq c1 \leq 0.05$, and $0.99 \leq x1 + y1 + z1 \leq 1.01$, and $B^1$ may be at least one element selected from among Ti, Mg, V, and Nb. $B^1$ may be a dopant doped in the first particle PTC1. The dopant may uniformly (e.g., substantially uniformly) control sizes of primary particles to improve charge-discharge efficiency and lifespan characteristics of a rechargeable lithium battery.

In some embodiments, Mn may not be present (i.e. $y1=0$). In some embodiments, $B^1$ may not be present (i.e. $z1=0$). In some embodiments, Mn and $B^1$ may not be present (i.e. $y1=0$ and $z1=0$). In some embodiments, c1 may be 0 (e.g. $y1=0$ and $c1=0$; $z1=0$ and $c1=0$; or $y1=0$, $z1=0$ and $c1=0$).

Referring still to FIG. 6, the first particle PTC1 may be in a polycrystalline form, and may include a secondary particle (e.g., be in secondary particle form) in which at least two primary particles NNP are aggregated (e.g., agglomerated). For example, one first particle PTC1 may include a plurality of primary particles NNP that are aggregated (e.g., agglomerated) with one another. The first particle PTC1 may have a spherical shape or an oval shape.

The first particle PTC1 may have an average particle diameter of about 1 micrometer ($\mu$m) to about 20 $\mu$m, about 3 $\mu$m to about 10 $\mu$m, or about 3 $\mu$m to about 7 $\mu$m. For example, in one or more embodiments, the average particle diameter of the first particle PTC1 may be about 5 $\mu$m. In one or more embodiments, the average particle diameter may be measured by a particle size analyzer. The average particle diameter may refer to a diameter ($D_{50}$) of particles having a cumulative volume of 50 vol% in a particle size distribution.

The primary particle NNP of the first particle PTC1 may have a size of about 10 nanometers (nm) to about 500 nm, about 50 nm to about 400 nm, about 100 nm to about 500 nm, about 100 nm to about 300 nm, or about 200 nm to about 300 nm. In one or more embodiments, the size of the primary particle NNP may refer to a diameter measured from approximately (about) 30 randomly selected primary particles NNP in an electron microscope image of the positive electrode active material. The primary particles NNP may have a substantially uniform size.

As the first particle PTC1 includes a plurality of primary particles NNP having small sizes as discussed above, the first particle PTC1 may have a relatively large surface area exposed to an electrolyte. In this regard, a contact area may be provided between the primary particles NNP and an electrolyte and may be increased to increase side reactions between the positive electrode active material and an electrolyte. The increase in side reactions may become pronounced under the condition of high temperature and high pressure. The increase in side reactions may cause an increase in gas generation and the occurrence of swelling phenomenon, thereby reducing battery lifespan characteristics.

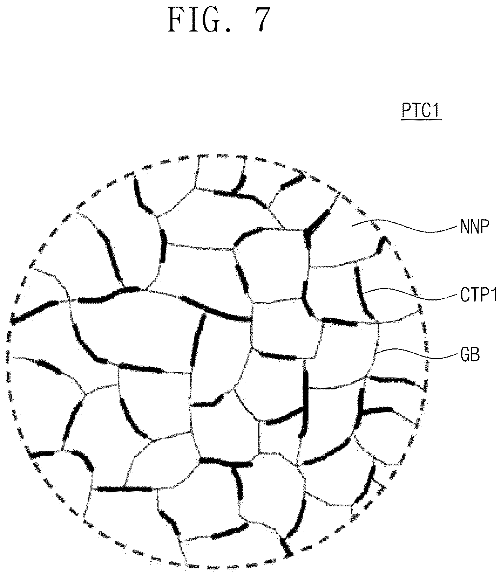

The first particle PTC1 according to one or more embodiments of the present disclosure may include a first coating part CTP1 (see FIG. 7), which has low reactivity with an electrolyte, on a surface of each of the primary particles NNP and has a stable structure, thereby reducing side reactions of the positive electrode active material. The reduction in side reactions may be more prominently observed under the condition of high temperature and high pressure.

Referring to FIG. 7, the first coating part CTP1 may be present within the first particle PTC1. The first coating part CTP1 may be formed along an interface between the primary particles NNP within the first particle PTC1. For example, an interface GB may correspond to a grain boundary in the first particle PTC1, and the first coating part CTP1 may refer to a grain-boundary coating part coated on the grain boundary in the first particle PTC1. The first coating part CTP1 may include a metal phosphate. In one or more embodiments, the first coating part CTP1 may include lithium cobalt phosphate expressed as $Li_mCoPO_4$ (where $0.8 \leq m \leq 1.2$).

An interior of the first particle PTC1 may indicate an entire interior of the first particle PTC1 except for a surface (e.g., outermost surface) of the first particle PTC1. For example, the interior of the first particle PTC1 may denote either an entire inside from about 10 nm depth away from the surface (e.g., outermost surface) of the first particle PTC1 to a center of the first particle PTC1 or a region from about 10 nm depth to about 2 $\mu$m depth. For example, in one or more embodiments, this interior region may extend from a depth of about 10 nm below the surface to the center of the first particle PTC1, or from about 10 nm below the surface to a depth of about 2 $\mu$m.

The lithium cobalt phosphate included in the first coating part CTP1 may have low reactivity with an electrolyte due to an oxidation state of cobalt being maintained at +3 or lower, and may exhibit less release of Co ions due to strong P-O bonds. The lithium cobalt phosphate may be suppressed from surface structural changes under high voltages due to its high operating voltage. As the first coating part CTP1 has low reactivity and excellent or suitable structural stability, it may reduce side reactions of the positive electrode active material and improve a lifespan of the battery.

In addition, the first coating part CTP1 may not cause a coating-induced increase in resistance. The lithium cobalt phosphate may have an olivine crystal structure and/or a tetrahedral crystal structure, and these crystal structures may have an open structure to allow the presence of transport paths of lithium ions. Therefore, even though the first particle PTC1 includes the first coating part CTP1 on the surfaces of the primary particles NNP, there may hardly be a reduction in rate characteristics of a rechargeable lithium battery.

In one or more embodiments the first particle PTC1 may further include a second coating part coated along the interface GB between the primary particles NNP. In one or more embodiments, the second coating part may be formed on the first coating part, and may be directly formed on the surface of the primary particle NNP. In one or more embodiments, the second coating part may be formed between the first coating part and the surface of the primary particle NNP. For example, the surface of the primary particle NNP, the first coating part, and the second coating part may be sequentially formed, or the surface of the primary particle NNP, the second coating part, and the first coating part may be sequentially formed.

The second coating part may include carbon and/or a carbon-containing compound. in one or more embodiments, the second coating part may further include at least one selected from among a titanium-containing compound, a magnesium-containing compound, and a vanadium-containing compound. Because the first particle PTC1 further includes the second coating part, structural stability may be reinforced, and a uniform (e.g., substantially uniform) coating part may be formed on the surface of the first particle PTC1. In addition, because the first particle PTC1 further includes the second coating part, an electrical conductivity may be further improved.

In one or more embodiments of the present disclosure, the first particle PTC1 may include a surface coating layer on a surface thereof. The surface coating layer may cover an entirety or a portion of the surface of the first particle PTC1. For example, the surface coating layer may include carbon and/or cobalt. For example, in one or more embodiments, the surface coating layer may include lithium cobalt phosphate and a carbon-containing compound. The surface coating layer may allow the first particle PTC1 to have improved structural stability and increased electrical conductivity.

In one or more embodiments, the surface coating layer may further include at least one selected from among a titanium-containing compound, a magnesium-containing compound, and a vanadium-containing compound. A metal-containing compound, such as a titanium-containing compound, a magnesium-containing compound, and/or a vanadium-containing compound, may be a metal oxide, a metal hydroxide, a metal carbonate, a composite thereof, or a (e.g., any suitable) mixture thereof. The metal-containing compound may further include other metal or a non-metal element. For example, the metal-containing compound may further include lithium.

The first particle PTC1 may include cobalt originated from the first coating part and/or the surface coating layer. An amount of cobalt in the first particle PTC1 may be in a range of about 0.01 mol% to about 5 mol%, about 0.05 mol% to about 2 mol%, about 0.1 mol% to about 1 mol%, or about 0.1 mol% to about 0.5 mol%, based on a total mole of metals excluding lithium in the first particle PTC1.

In one or more embodiments of the present disclosure, the amount of cobalt included in the first particle PTC1 may be analyzed by using inductively coupled plasma-mass spectrometry (ICP-MS) or inductively coupled plasma optical emission spectroscopy (ICP-OES).

The first particle PTC1 may include carbon originated from the second coating part and/or the surface coating layer. An amount of carbon in the first particle PTC1 may be in a range of about 0.5 wt% to about 10 wt%, about 1.0 wt% to about 3.0 wt%, about 1.5 wt% to about 2.5 wt%, or about 1.0 wt% to about 2.5 wt%, based on a total weight of the first particle PTC1.

The carbon element analysis may be performed by an Elementar Micro Cube element analyzer. A detailed operation method and condition may be as follows. A sample of 1 to 2 mg may be weighed into a tin cup and placed into an automatic sampling tray, and then introduced into a combustion tube through a ball valve, thereby being combusted at a combustion temperature of 1,000 °C. Thereafter, reduced copper may be used to reduce the combusted gas to form carbon dioxide. A thermal conductivity detector (TCD) may be used to detect the carbon dioxide.

The first particle PTC1 may have a shape in which nano-sized primary particles NNP are aggregated (e.g., agglomerated). As the primary particles NNP are densely aggregated (e.g., agglomerated) with one another, the first particle PTC1 may exhibit the following features. The first particle PTC1 may have a spherical shape or an oval shape. An average particle diameter ($D_{50}$) of the first particle PTC1 may be in a range of about 2 $\mu$m to about 15 $\mu$m. A porosity of the first particle PTC1 may be in range of about 20% to about 40%. Here, porosity (n) may be defined as the pore volume (Vp) divided by the total volume (Vt) of particles, or

$$n = \frac{V_p}{V_t}.$$

A span value of the first particle PTC1 analyzed by a particle size analyzer may be in a range from about 0.3 to about 0.75. In particle size analysis, the span value is a value that indicates the width of the particle size distribution, or

$$\mathrm{Span} = \frac{D_{90}-D_{10}}{D_{50}}.$$

A lower span value indicates a more uniform particle size distribution, meaning the particles are more consistent in size. Conversely, a higher span value suggests a wider range of particle sizes within the sample.

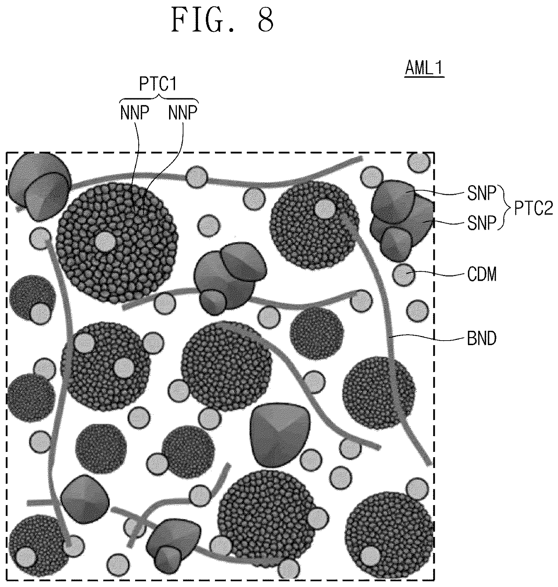

FIG. 8 illustrates an enlarged view showing the positive electrode active material layer AML1 of a rechargeable lithium battery according to one or more embodiments of the present disclosure.

Referring to FIG. 8, the positive electrode active material may further include a second particle PTC2 represented by Chemical Formula 2.

**Chemical Formula 2**        $Li_{a2}Ni_{x2}Co_{y2}Mn_{z2}X_{c2}O_{2-b2}$

In Chemical Formula 2, the subscripts a2, x2, y2, z2, c2, and b2 may satisfy the relationship of $0.8 \leq a2 \leq 1.2$, $0.5 \leq x2 < 1.0$, $0 < y2 \leq 0.3$, $0 \leq z2 \leq 0.2$, $0 \leq c2 \leq 0.05$, $0 \leq b2 \leq 0.05$, and $x2+y2+z2+c2=1$, and X may be at least one element selected from among Al, Ti, Mg, Zr, Mo, and Nb. X may be a dopant doped in the second particle PTC2.

In some embodiments, X may not be present (i.e. c2=0). In some embodiments, b2 may be 0 (e.g. c2=0 and b2=0).

Referring to FIG. 8, the second particle PTC2 may have (e.g., be in) a single particle form. In this description, the term "single particle" may refer to an individual particle without a grain boundary therein. The single particle may indicate one particle, a monolithic structure, a single unitary structure, or a non-aggregated (e.g., non-agglomerated) particle, where particles are not aggregated (e.g., agglomerated) together with one another but present as an independent phase in terms of morphology. For example, the single particle may be a single crystal. In one or more embodiments, the single particle may be a particle containing several crystals. The single particle may be independently divided. In one or more embodiments, the single particle may have a form in which 2 to 100 independent particles are attached to one another.

In one or more embodiments, the second particle PTC2 may have a shape formed of one single particle. In one or more embodiments, the second particle PTC2 may have a shape in which a plurality of single particles SNP are attached to each other. As the positive electrode active material according to the present disclosure includes the second particle PTC2 in the form of single particle, a rechargeable lithium battery including the positive electrode active material may achieve a high capacity and a high energy density.

In one or more embodiments, the second particle PTC2 may include a coating layer on a surface thereof. As the second particle PTC2 includes the coating layer, it may effectively suppress or reduce structural collapse due to repetition of charge and discharge. Accordingly, the rechargeable lithium battery may improve in lifespan characteristics.

The coating layer of the second particle PTC2 may include a boron-containing compound, an aluminium-containing compound, and/or a (e.g., any suitable) combination thereof. A metal-containing compound in the coating layer may be, for example, a metal oxide, a metal hydroxide, a metal carbonate, a composite thereof, or a (e.g., any suitable) mixture thereof. The metal-containing compound may further include other metal or a non-metal element. For example, in one or more embodiments, the coating layer may further include one or more selected from among lithium, manganese, and nickel.

A method of measuring an amount of metal in the coating layer of the second particle PTC2 may include performing scanning electron microscope-energy dispersive X-ray spectroscopy (SEM-EDS) on the second particle PTC2. The analysis may determine an amount of boron and/or aluminium in the coating layer. The amount of metal included in the coating layer may be analyzed by using inductively coupled plasma-mass spectrometry (ICP-MS) or inductively coupled plasma optical emission spectroscopy (ICP-OES), in addition to scanning electron microscope-energy dispersive X-ray spectroscopy (SEM-EDS).

The second particle PTC2 (e.g., second particles) may have an average particle diameter of about 2 $\mu$m to about 15 $\mu$m, about 2 $\mu$m to about 10 $\mu$m, or about 2 $\mu$m to about 5 $\mu$m. The average particle diameter of the second particle PTC2 may be less than that of the first particle PTC1 (e.g., the average diameter of the first particles) discussed above. When the second particle PTC2 includes a plurality of single particles SNP, the single particle SNP (e.g., single particles) of the second particle PTC2 may have an average size greater than an average size of the primary particle NNP of the first particle PTC1. In one or more embodiments, the average particle diameter may be measured by a particle size analyzer. The average particle diameter may refer to a diameter ($D_{50}$) of particles having a cumulative volume of 50 vol% in a particle size distribution.

In one or more embodiments of the present disclosure, the second particle PTC2 may have a secondary particle form (e.g., be in a form of secondary particle) where primary particles are aggregated (e.g., agglomerated). In these embodiments, the second particle PTC2 may have a granular shape or a spherical shape, and the average particle diameter of the second particle PTC2 may be in a range of about 10 $\mu$m to about 30 $\mu$m, about 10 $\mu$m to about 20 $\mu$m, or about 10 $\mu$m to about 15 $\mu$m. In one or more embodiments of the present disclosure, the second particle PTC2 may exist in a mixed form in which a compound in the form of a primary particle is mixed with a compound in the form of a secondary particle.

When the positive electrode active material according to one or more embodiments of the present disclosure includes the first particle PTC1 and the second particle PTC2, and the first particle PTC1 and the second particle PTC2 may be mixed in a weight ratio of about 90:10 to about 50:50 or about 85:15 to about 75:25. When the mixing ratio of the first particle PTC1 and the second particle PTC2 falls within the range above, the rechargeable lithium battery may exhibit excellent or suitable lifespan and high-temperature storage characteristics while having a superior energy density.

## Manufacture of Positive Electrode Active Material

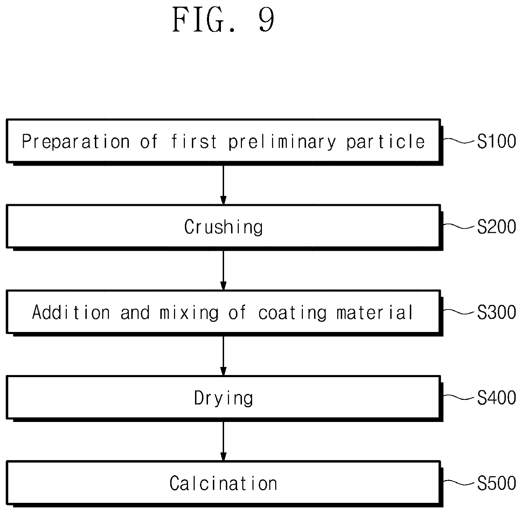

FIG. 9 illustrates a flow chart showing a method of manufacturing a positive electrode active material according to one or more embodiments of the present disclosure. With reference to FIG. 9, a method of manufacturing the first particle PTC1 according to one or more embodiments of the present disclosure will be described in more detail.

A method of manufacturing the first particle PTC1 according to one or more embodiments of the present disclosure may include preparing a first preliminary particle (S100), crushing the first preliminary particle (S200), mixing the crushed first preliminary particle and a coating material with each other to form a mixture (S300), drying the mixture (S400), and performing calcination on the dried mixture (S500).

In one or more embodiments, the preparation of the first preliminary particle (S100) may include mixing an iron phosphate precursor, a lithium source, and a carbon source with one another to form a preliminary mixture, wet crushing the preliminary mixture, and drying the crushed preliminary mixture.

The iron phosphate precursor, the lithium source, and the carbon source may be added to and mixed in a solvent. For example, the solvent may be water and/or ethanol. The iron phosphate precursor may be a compound containing all of iron (Fe) and phosphorus (P), or a (e.g., any suitable) mixture of a compound containing iron (Fe) and a compound containing phosphorus (P). For example, in one or more embodiments, the iron phosphate precursor may include $FePO_4 \cdot H_2O$ or a (e.g., any suitable) mixture of $FeSO_4$ and $H_3PO_4$. For example, in one or more embodiments, the iron phosphate precursor may include $FePO_4$ or a (e.g., any suitable) mixture of $FeSO_4$ and $H_3PO_4$.

The lithium source may include at least one selected from among lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from among glucose, sucrose, fructose, cellulose, starch, citric acid, polyacrylic acid, polyethylene glycol, and dopamine.

In one or more embodiments, a wet crushing may be performed on the preliminary mixture. The wet crushing may use a suitable wet mill capable of controlling temperatures. For example, the wet crushing may use at least one selected from among a beads mill, a ball mill, an attrition mill, an apex mill, a super mill, and a basket mill. During the wet crushing process, particles in the preliminary mixture may be crushed to fine sizes.

In one or more embodiments of the present disclosure, the wet crushing may not be provided. For example, a wet crushing of the preliminary mixture may not be provided to maximize or increase an average particle diameter of the first particle PTC1 which will be eventually prepared.

A solvent may be removed from the preliminary mixture to form a dried preliminary mixture. The formation of the dried preliminary mixture may include performing a spray drying on the preliminary mixture. The spray drying may use a commonly available spray dryer. For example, the spray drying may use at least one selected from among an ultrasonic spray dryer, an air nozzle spray dryer, an ultrasonic nozzle spray dryer, a filter expansion droplet generation device, and an electrostatic spray dryer.

Particles, which have been reduced to primary particle sizes through the wet crushing process, may be aggregated (e.g., agglomerated) during the spray drying process to form a secondary particle. Thus, a flow rate and velocity of carrier gas, temperature, and residence time and internal pressure in a reactor may be adjusted during the spray drying process to form a first particle in the form of a secondary particle having a target size.

In one or more embodiments, the mixture targeted for the spray drying may have a total solid content (e.g., amount) in a range of about 20% to about 40%. The solid content (e.g., amount) may refer to the weight percentage of a solid material (or a dried mixture) remaining after the evaporation of a solvent relative to the total weight of a mixture (or a spray solution prior to the evaporation of the solvent). For example, in one or more embodiments, the spray solution may have a solid content (e.g., amount) of about 30 wt%.

The spray solution according to one or more embodiments of the present disclosure may have a viscosity of about 1,500 mPa·s to about 2,500 mPa·s at the aforementioned solid content (e.g., amount). For example, in one or more embodiments, the spray solution may have a viscosity of about 2,000 mPa·s.

In one or more embodiments, a feed rate for the spray drying may be in a range of about 0.1 kg/min to about 0.9 kg/min. A feed rate of the spray drying may refer to the weight of a mixture of a solvent and a raw material that are fed per minute. In one or more embodiments, the feed rate for the spray drying according to the present disclosure may be about 0.5 kg/min.

In one or more embodiments, the spray drying may be performed at a temperature of about 100 °C to about 300 °C. For example, the spray drying may be performed at a temperature in a range of about 200 °C to about 300 °C, greater than about 200 °C to about 300 °C, or about 230 °C to about 270 °C. A spray gas (e.g., air) used in the spray drying may be introduced at a first temperature and discharged at a second temperature. For example, the first temperature may be in a range of about 200 °C to about 250 °C. The second temperature may be in a range from 80 °C to about 150 °C

The spray solution of the spray drying may have a flow rate of about 30 mL/min to about 80 mL/min. If (e.g., when) the flow rate is less than about 30 mL/min, problems such as nozzle clogging and/or productivity reduction may occur. If (e.g., when) the flow rate is greater than about 80 mL/min, moisture may be condensed in a spray dryer and thus problems such as incomplete drying of the mixture may occur. A feed pressure of the spray solution may be in a range of about 0.3 MPa to about 0.7 MPa. For example, in one or more embodiments, the feed pressure of the spray solution may be about 0.5 MPa.

The dried preliminary mixture may be calcined under an inert atmosphere. The inert atmosphere may be a nitrogen atmosphere and/or an argon atmosphere. A temperature of the calcination process may be in a range of about 500 °C to about 1,000 °C or about 600 °C to about 800 °C. The calcination process may be performed for about 4 hours to about 20 hours or about 6 hours to about 12 hours. The calcination of the dried preliminary mixture may form a first preliminary particle including the compound represented by Chemical Formula 1.

Before the calcination process, in one or more embodiments, a process may further be performed in which the dried preliminary mixture and a dopant source are added and mixed. The dopant source may include an oxide containing dopant metal and/or a chloride containing dopant metal. For example, the dopant source may include at least one selected from among an oxide of Mg, a chloride of Mg, an oxide of Ti, and a chloride of Ti. For example, in one or more embodiments, the dopant source may include at least one selected from among an oxide of Mg and a chloride of Mg and at least one selected from among an oxide of Ti and a chloride of Ti.

The prepared first preliminary particle may be crushed (S200). The first preliminary particle may be crushed at a rotation speed of about 7,000 rpm to about 10,000 rpm. For example, the first preliminary particle may be crushed at a rotation speed of about 7,000 rpm to about 9,000 rpm, about 7,500 rpm to about 9,000 rpm, or about 7,500 rpm to about 8,500 rpm. The prepared first preliminary particle through the crushing process may be finely crushed into sizes of primary particles.

The crushed first preliminary particle and a coating material may be mixed to form a mixture (S300). The coating material may include a lithium phosphate precursor and a metal source. The lithium phosphate precursor may be a compound including all of lithium (Li) and phosphorus (P). For example, in one or more embodiments, the lithium phosphate precursor may be $LiH_2PO_4$. The metal source may be a compound including cobalt. The compound including cobalt may be, for example, $CoCO_3$.

The coating material may further include a carbon source. The carbon source may include at least one selected from among glucose, sucrose, fructose, cellulose, starch, citric acid, polyacrylic acid, polyethylene glycol, and dopamine.

A drying process may be performed again on the mixture (S400). The drying process may include a spray drying. A condition of the spray drying may be the same as or similar to that used for the preparation of the first preliminary particle.

In one or more embodiments, the mixture targeted for the spray drying may have a total solid content (e.g., amount) in a range of about 20% to about 40%, and a spray solution may have a viscosity of about 1,500 mPa·s to about 2,500 mPa·s at the aforementioned solid content (e.g., amount). In one or more embodiments, a feed rate for the spray drying may be in a range of about 0.1 kg/min to about 0.9 kg/min, and the spray drying may be performed at a temperature of about 100 °C to about 300 °C. A feed pressure of the spray solution may be in a range of about 0.3 MPa to about 0.7 MPa.

When the feed rate, the feed pressure, and the temperature of the spray drying satisfy the ranges above, the first particle PTC1 may have a spherical shape and a target porosity.

A calcination process may be performed on the dried mixture (S500). The calcination process may be the same as or similar to that used for the preparation of the first preliminary particle. In one or more embodiments, the calcination process may be performed under an inert atmosphere. A calcination process may be about 500 °C to about 1,000 °C, and a calcination time may be about 4 hours to about 20 hours. The calcination of the dried mixture may form a first particle in which a coating part that includes lithium metal phosphate on a surface of the primary particle is formed.

In a first particle prepared according to a fabrication method of the present disclosure, a crushed first preliminary particle and a coating raw material may be mixed to form a coating part including lithium cobalt phosphate on a surface of the primary particle. Afterwards, a spray drying may cause agglomeration of primary particles to form a dense secondary spherical particle. Therefore, the first particle may include a coating part including lithium cobalt phosphate in exterior and interior of the first particle. Accordingly, the first particle may effectively suppress or reduce side reactions with an electrolyte, and may improve in storage and lifespan characteristics at high temperatures.

The following will describe some examples and comparative examples of the present disclosure. The following embodiments, however, are merely examples, and the present disclosure is not limited to one or more embodiments discussed below.

**Embodiment 1: Manufacture of Positive Electrode Active Material**

$FePO_4 \cdot H_2O$ as an iron phosphate precursor and lithium carbonate were mixed in a molar ratio of 1:1. 10 wt% of glucose, based on the total weight of $FePO_4 \cdot H_2O$ as the iron phosphate precursor and lithium carbonate, was additionally added to the mixture. A ball mill was utilized to perform a wet crushing process on the mixture. The mixture as a slurry was spray dried at a temperature of 230 °C under a spray pressure of 0.4 MPa, thereby being evaporated and dried. The dried mixture was calcined at 780 °C for 10 hours under a nitrogen atmosphere to obtain a first preliminary particle in the form of a secondary particle.

A ball mill was utilized to perform a wet crushing process on the first preliminary particle. The crushed first preliminary particle ($LiFePO_4$), $LiH_2PO_4$, and $CoCO_3$ were mixed in a molar ratio of 1:0.001:0.001. 3 wt% of glucose was additionally added to the mixture. The mixture as a slurry was spray dried at a temperature of 230 °C under a spray pressure of 0.4 MPa, thereby being evaporated and dried. The dried mixture was calcined at 720 °C for 4 hours under a nitrogen atmosphere to obtain a first particle in the form of a secondary particle. An amount of cobalt included in the first particle was 0.1 mol%, provided on an interface between the primary particles in the form of lithium cobalt phosphate.

In summary, $FePO_4 \cdot H_2O$ as an iron phosphate precursor and lithium carbonate are mixed in a molar ratio of 1:1. 10 wt% of glucose is added to the mixture. The mixture undergoes wet crushing using a ball mill. The slurry mixture is spray dried at 230 °C under 0.4 MPa pressure. The dried mixture is calcined at 780 °C for 10 hours under a nitrogen atmosphere to form a first preliminary particle. The first preliminary particle is wet crushed using a ball mill. The crushed particle ($LiFePO_4$), $LiH_2PO_4$, and $CoCO_3$ are mixed in a molar ratio of 1:0.001:0.001. 3 wt% of glucose is added to the mixture. The slurry mixture is spray dried at 230 °C under 0.4 MPa pressure. The dried mixture is calcined at 720 °C for 4 hours under a nitrogen atmosphere to form a first particle. The first particle contains 0.1 mol% cobalt.

### Embodiment 2-1

A first particle was prepared in substantially the same method as in Embodiment 1, and a second particle was prepared in the following method.

A coprecipitation method was used to prepare a high-nickel-based precursor. For example, nickel sulfate ($NiSO_4 \cdot 6H_2O$), cobalt sulfate ($CoSO_4 \cdot 7H_2O$), and manganese sulfate ($MnSO_4 \cdot H_2O$) in a molar ratio of 92:5:3 as a raw material of nickel-based metal hydroxide were dissolved in distilled water as a solvent, thereby preparing a metal raw material mixture solution. The metal raw material mixture solution, ammonium hydroxide, and sodium hydroxide were added to and reacted in a reactor. A slurry solution in the reactor was filtered and washed with high-purity distilled water. The washed material was dried in a hot-air oven at 210 °C for 24 hours to obtain powder of small-particle precursor ($Ni_{0.92}CO_{0.05}Mn_{0.03}(OH)_2$) with a particle diameter of about 4 μm.

A Henschel mixer was used such that the high-nickel-based precursor and anhydrous lithium hydroxide (LiOH) were mixed in a dry type (kind). Lithium and transition metal were mixed in a molar ratio of about 1.05:1. The transition metal was a total sum (Ni+Co+Mn) of transition metals contained in the high-nickel-based precursor. A melting agent was additionally added to the mixture and thermally treated (or calcined) for 15 hours at about 750 °C to synthesize a preliminary second particle or a high-nickel-based positive electrode active material. The preliminary second particle was crushed with a Jet Mill under a pressure of 3 bars.

The preliminary second particle was added to and washed with distilled water. A boron and aluminium coating was performed by introducing boron oxide and aluminium oxide each present in an amount of 3 mol% relative to the sum total of transition metals of the preliminary second particle. The coated preliminary second particle was dried for 12 hours at 150 °C, and a heat treatment (or, surface treatment) was performed for 15 hours at about 700 °C under an oxygen atmosphere, thereby preparing a second particle.

The first particle and the second particle were mixed in a weight ratio of 4:1 to manufacture a positive electrode active material.

In summary, a first particle is prepared utilizing the same method as in Embodiment 1. A high-nickel-based precursor is prepared utilizing a coprecipitation method with nickel sulfate, cobalt sulfate, and manganese sulfate in a molar ratio of 92:5:3. These are dissolved in distilled water, reacted with ammonium hydroxide and sodium hydroxide, filtered, washed, and dried to obtain a small-particle precursor ($Ni_{0.92}Co_{0.05}Mn_{0.03}(OH)_2$) with a particle diameter of about 4 μm. The high-nickel-based precursor and anhydrous lithium hydroxide are mixed in a molar ratio of about 1.05:1, with a melting agent added. The mixture is thermally treated at about 750 °C for 15 hours to synthesize a preliminary second particle. This particle is crushed with a Jet Mill under 3 bars pressure, washed with distilled water, and coated with boron oxide and aluminium oxide (each 3 mol% relative to the transition metals). The coated particle is dried at 150 °C for 12 hours and heat-treated at about 700 °C for 15 hours under an oxygen atmosphere to prepare a second particle. The first and second particles are mixed in a weight ratio of 4:1 to manufacture the positive electrode active material.

### Embodiment 2-2

A first particle was prepared in substantially the same method as in Embodiment 1, except that the first preliminary particle ($LiFePO_4$), $LiH_2PO_4$, and $CoCO_3$ were mixed in a molar ratio of 1:0.003:0.003 when the first particle was prepared. An amount of cobalt included in the first particle was 0.3 mol%.

A second particle was prepared in substantially the same method as in Embodiment 2-1, and the first particle and the second particle were mixed in a weight ratio of 4:1 to manufacture a positive electrode active material.

### Embodiment 2-3

A first particle was prepared in substantially the same method as in Embodiment 1, except that the first preliminary particle ($LiFePO_4$), $LiH_2PO_4$, and $CoCO_3$ were mixed in a molar ratio of 1:0.005:0.005 when the first particle was prepared. An amount of cobalt included in the first particle was 0.5 mol%.

A second particle was prepared in substantially the same method as in Embodiment 2-1, and the first particle and the second particle were mixed in a weight ratio of 4:1 to manufacture a positive electrode active material.

### Embodiment 2-4

A first particle was prepared in substantially the same method as in Embodiment 1, except that the first preliminary particle ($LiFePO_4$), $LiH_2PO_4$, and $CoCO_3$ were mixed in a molar ratio of 1:0.01:0.01 when the first particle was prepared. An amount of cobalt included in the first particle was 1 mol%.

A second particle was prepared in substantially the same method as in Embodiment 2-1, and the first particle and the second particle were mixed in a weight ratio of 4:1 to manufacture a positive electrode active material.

**Embodiment 2-5**

A first particle was prepared in substantially the same method as in Embodiment 1, except that the first preliminary particle (LiFePO$_4$), LiH$_2$PO$_4$, and CoCO$_3$ were mixed in a molar ratio of 1:0.02:0.02 when the first particle was prepared. An amount of cobalt included in the first particle was 2 mol%.

A second particle was prepared in substantially the same method as in Embodiment 2-1, and the first particle and the second particle were mixed in a weight ratio of 4:1 to manufacture a positive electrode active material.

**Comparative 1**

FePO$_4$·H$_2$O as an iron phosphate precursor and lithium carbonate were mixed in a molar ratio of 1:1. 10 wt% of glucose, based on the total weight of FePO$_4$·H$_2$O as the iron phosphate precursor and lithium carbonate, was additionally added to the mixture. A ball mill was utilized to perform a wet crushing process on the mixture. The mixture as a slurry was spray dried at a temperature of 230 °C under a spray pressure of 0.5 MPa, thereby being evaporated and dried. The dried mixture was calcined at 750 °C for 10 hours under a nitrogen atmosphere to obtain a first particle in the form of a secondary particle.

**Comparative 2**

A first particle was prepared in substantially the same method as in Comparative 1, and a second particle was prepared in substantially the same method as in Embodiment 2-1.

The first particle and the second particle were mixed in a weight ratio of 4:1 to manufacture a positive electrode active material.

**Manufacture of Positive Electrode**

95 wt% of the positive electrode active material, 3 wt% of polyvinylidenefluoride as a binder, and 2 wt% of carbon black as a conductive material were mixed in an N-methylpyrrolidone solvent to prepare a positive electrode active material slurry. The positive electrode active material slurry was coated on an aluminium current collector, and then dried and pressed to manufacture a positive electrode.

**Manufacture of Negative Electrode**

Graphite, a binder, and a conductive material were mixed in an N-methylpyrrolidone solvent to prepare a negative electrode active material slurry. The negative electrode active material slurry was coated on a copper current collector, and then dried and pressed to manufacture a negative electrode.

**Fabrication of Rechargeable Lithium Battery**

The positive electrode and the negative electrode were used to fabricate a coin full cell. A polypropylene layer (Celgard 3510) was used as a separator. An electrolyte was obtained by mixing 1.3 M of LiPF$_6$ in a solvent containing ethylene carbonate (EC), diethyl carbonate (DEC), and fluoroethylene carbonate (FEC) mixed in a volume ratio of 2:6:3.

**Evaluation Example**

Each of rechargeable lithium batteries fabricated using the respective positive electrode active materials of the examples and the comparative examples was allowed to evaluate its capacity, lifespan, and high-temperature storage characteristics.

**Evaluation of Capacity**

The rechargeable lithium battery was initially charged under the condition of a constant current (0.2 C) and constant voltage (4.25 V), rested for 10 minutes, and then initially discharged to 2.5 V under the condition of a constant current (0.2 C). An initial charge-discharge capacity and efficiency are listed in Table 1. The charge-discharge efficiency was calculated according to Equation 1.

## Equation 1

$$\text{Efficiency (\%)} = (\text{initial discharge capacity/initial charge capacity}) \times 100$$

**Evaluation of High-Temperature Lifespan**

The rechargeable lithium battery was initially charged under the condition of a constant current (0.2 C) and a constant voltage (4.25 V), rested for 10 minutes, and then initially discharged to 2.5 V under the condition of a constant current (0.2 C). After the initial charge and discharge, 50 cycles of charge and discharge were carried out at 45 °C with a rate of 0.5 C/0.5 C to measure a battery charge retention rate, and the results are shown in Table 1. The charge retention rate was calculated according to Equation 2. The higher the charge retention rate, the longer the lifespan of the rechargeable lithium battery.

Capacity retention rate (%) = (discharge capacity at $50^{th}$ cycle/discharge capacity at $1^{st}$ cycle) $\times$ 100        Equation 2

**Evaluation of High-Temperature Storage Characteristics - Capacity Recovery Rate, DC-IR Increase Rate**

The rechargeable lithium battery was initially charged under the condition of a constant current (0.2 C) and a constant voltage (4.25 V), rested for 10 minutes, and then initially discharged to 2.5 V under the condition of a constant current (0.2 C).
Afterwards, the rechargeable lithium battery was charged to SOC 100% (e.g., a 100% charged state when the total charge capacity is set to 100%), stored at 60 °C for 30 days, and then discharged under the condition of a constant current of 0.2 C until 2.5 V reached to measure a capacity recovery rate listed in Table 1. The capacity recovery rate was calculated according to Equation 3.
After $\Delta V/\Delta I$ (voltage change/current change) was measured with respect to initial direct-current internal resistance (DC-IR) of the rechargeable lithium battery, the battery was allowed to charge its maximum energy state into a full charge state (SOC 100%) and stored in the charged state at a high temperature (60 °C) for 30 days, and then direct-current internal resistance (DC-IR) was measured. A DC-IR increase rate (%) was calculated and its result is listed in Table 1. The DC-IR increase rate (%) was calculated according to Equation 4.

Capacity recovery rate (%) = (discharge capacity after high-temperature storage / discharge capacity before high-temperature storage) $\times$ 100        Equation 3

## Equation 4

$$\text{DC-IR increase rate (\%)} = (\text{DC-IR after 30 days / initial DC-IR}) \times 100$$

Table 1

| | Co amount (mol%) | 4.25V charge amount (mAh/g) | 4.25V discharge amount (mAh/g) | 4.25V efficiency (%) | 4.25V charge retention rate (%, $50^{th}$ cyc) | Discharge capacity recovery rate (%) | DC-IR increase rate (%) |
|---|---|---|---|---|---|---|---|
| Embodiment 1 | 0.1 | 161.8 | 157.6 | 97.4 | 99.50 | 95.4 | 105 |
| Comparative 1 | 0 | 162.6 | 158.1 | 97.2 | 98.8 | 93.9 | 125 |

Referring to Table 1, it may be observed that, compared to the rechargeable lithium battery according to Comparative 1, the rechargeable lithium battery according to Embodiment 1 exhibits excellent or suitable efficiency, lifespan, and high-temperature storage characteristics while having a similar level of capacity.

Table 2

| | Co amount (mol%) | 4.25V charge amount (mAh/g) | 4.25V discharge amount (mAh/g) | 4.25V efficiency (%) | 4.25V charge retention rate (%, 50th cyc) | Discharge capacity recovery rate (%) | DC-IR increase rate (%) |
|---|---|---|---|---|---|---|---|
| Comparative 2 | 0 | 173.4 | 165.5 | 95.4 | 95.2 | 92.3 | 244 |
| Embodiment 2-1 | 0.1 | 173.3 | 165.3 | 95.4 | 95.2 | 92.7 | 222 |
| Embodiment 2-2 | 0.3 | 172.6 | 165.1 | 95.7 | 97.1 | 95.4 | 176 |
| Embodiment 2-3 | 0.5 | 172.2 | 165 | 95.8 | 97.9 | 96.2 | 168 |
| Embodiment 2-4 | 1 | 168.5 | 162.6 | 96.5 | 98.8 | 96.6 | 143 |
| Embodiment 2-5 | 2 | 165.7 | 159.8 | 96.4 | 98.9 | 96.9 | 135 |

Referring to Table 2, it may be observed that, compared to the rechargeable lithium battery according to Comparative 2, each of the rechargeable lithium batteries according to Embodiments 2-1 to 2-5 exhibits excellent or suitable efficiency, lifespan, and high-temperature storage characteristics. For example, it may be observed that each of the rechargeable lithium batteries according to Embodiments 2-1 to 2-3 exhibits excellent or suitable high-temperature properties while having a similar level of capacity to that of the rechargeable lithium battery according to Comparative 2.

In a positive electrode active material according to the present disclosure, a first particle or an olivine-based positive electrode active material may include a coating part to improve lifespan and storage characteristics at high temperatures. A rechargeable lithium battery according to the present disclosure may have excellent or suitable high-temperature lifespan and high-temperature storage characteristics.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While this disclosure has been described in connection with what is presently considered to be example embodiments, it is to be understood that the present disclosure is not limited to the disclosed embodiments and is intended to cover one or more suitable modifications and equivalent arrangements included within the scope of the appended claims and equivalents thereof, and therefore the aforementioned embodiments should be understood to be exemplarily but not limiting this disclosure in any way.

Embodiments are set out in the following clauses:

Clause 1. A positive electrode active material, comprising:

a first particle that comprises a plurality of primary particles and a first coating part on an interface between the primary particles,
wherein the plurality of primary particles comprise a compound represented by Chemical Formula 1,
wherein the first coating part comprises lithium metal phosphate,

[Chemical Formula 1] $\quad$ $Li_{a1}Fe_{x1}Mn_{y1}B_{z1}PO_{4-c1}$

wherein, in Chemical Formula 1,
$0.8 < a1 \leq 1.2$, $0.7 \leq x1 \leq 1.0$, $0 \leq y1 \leq 0.3$, $0 \leq z1 \leq 0.05$, $0 \leq c1 \leq 0.05$, and $0.99 \leq x1+y1+z1 \leq 1.01$, and
B is at least one element selected from Ti, Mg, V, and Nb.

Clause 2. The positive electrode active material of clause 1, wherein the first coating part comprises lithium cobalt phosphate represented by $Li_nCoPO_4$ (where $0.8 \leq m \leq 1.2$).

Clause 3. The positive electrode active material of clause 2, wherein an amount of cobalt in the first particle is about 0.1 mol% to about 0.5 mol%.

Clause 4. The positive electrode active material of any one of clauses 1 to 3, wherein the first particle further comprises a second coating part on the first coating part,
wherein the second coating part comprises carbon.

Clause 5. The positive electrode active material of clause 4, wherein an amount of carbon in the first particle is about 1.0 wt% to about 2.5 wt%.

Clause 6. The positive electrode active material of any one of clauses 1 to 5, wherein the first particle further comprises a surface coating layer on the surface of the first particle,
wherein the surface coating layer comprises at least one selected from cobalt and carbon.

Clause 7. The positive electrode active material of any one of clauses 1 to 6, wherein the first particle is a spherical secondary particle.

Clause 8. The positive electrode active material of any one of clauses 1 to 7, wherein

a first average particle diameter of the first particle is about 1 $\mu$m to about 20 $\mu$m, and
an average size of the primary particle is about 100 nm to about 500 nm.

Clause 9. The positive electrode active material of any one of clauses 1 to 8, wherein a porosity of the first particle is about 20% to about 40%.

Clause 10. The positive electrode active material of any one of clauses 1 to 9, further comprising a second particle represented by Chemical Formula 2,

[Chemical Formula 2] $Li_{a2}Ni_{x2}Coy_2Mnz_2X_{c2}O_{2-b2}$

wherein, in Chemical Formula 2,
$0.8 \leq a2 \leq 1.2$, $0.5 \leq x2 < 1.0$, $0 < y2 \leq 0.3$, $0 \leq z2 \leq 0.2$ $0 \leq c2 \leq 0.05$, $0 \leq b2 \leq 0.05$, and $x2+y2+z2+c2=1$, and
X is at least one element selected from Al, Ti, Mg, Zr, Mo, and Nb.

Clause 11. The positive electrode active material of clause 10, wherein the second particle has a single particle form.

Clause 12. The positive electrode active material of clause 10 or clause 11, wherein a second average particle diameter of the second particle is less than a first average particle diameter of the first particle.

Clause 13. The positive electrode active material of any one of clauses 10 to 12, wherein a mixing ratio of the first particle and the second particle is about 90:10 to about 50:50 by weight.

Clause 14. A method of manufacturing a positive electrode active material, the method comprising:

preparing a first preliminary particle that comprises a compound represented by Chemical Formula 1;
crushing the first preliminary particle;
mixing the crushed first preliminary particle and a coating material with each other to form a mixture, wherein the coating material comprises a cobalt source;
drying the mixture; and
performing calcination on the mixture,

[Chemical Formula 1] $Li_{a1}Fe_{x1}Mn_{y1}B_{z1}PO_{4-c1}$

wherein, in Chemical Formula 1,
$0.8 < a1 \leq 1.2$, $0.7 \leq x1 \leq 1.0$, $0 \leq y1 \leq 0.3$, $0 \leq z1 \leq 0.05$, $0 \leq c1 \leq 0.05$, and $0.99 \leq x1+y1+z1 \leq 1.01$, and
B is at least one element selected from Ti, Mg, V, and Nb.

Clause 15. The method of clause 14, wherein an amount of cobalt in the positive electrode active material is about 0.1 mol% to about 0.5 mol%.

Clause 16. The method of clause 14 or clause 15, wherein the coating material further comprises a carbon source.

Clause 17. The method of any one of clauses 14 to 16, wherein preparing the first preliminary particle comprises:

mixing an iron phosphate precursor, a lithium source, and a carbon source with each other to form a preliminary mixture;
wet crushing the preliminary mixture;
drying the crushed preliminary mixture; and
performing calcination on the dried preliminary mixture.

Clause 18. A positive electrode for a rechargeable lithium battery, the positive electrode comprising:

a positive electrode current collector; and
a positive electrode active material layer on the positive electrode current collector,
wherein the positive electrode active material layer comprises the positive electrode active material as set forth in any one of clauses 1 to 13, a conductive material, and a binder.

Clause 19. The positive electrode of clause 18, wherein an amount of the binder is about 0.5 parts by weight to about 5 parts by weight relative to 100 parts by weight of the positive electrode active material layer.

Clause 20. The positive electrode of clause 18 or clause 19, wherein an amount of the conductive material is about 0.5 parts by weight to about 5 parts by weight relative to 100 parts by weight of the positive electrode active material layer.

**Claims**

1. A positive electrode active material, comprising:

    a first particle that comprises a plurality of primary particles and a first coating part on an interface between the primary particles,
    wherein the plurality of primary particles comprise a compound represented by Chemical Formula 1, and
    wherein the first coating part comprises lithium metal phosphate,

    Chemical Formula 1 $\quad\quad\quad\quad Li_{a1}Fe_{x1}Mn_{y1}B^1{}_{z1}PO_{4-c1}$

    in Chemical Formula 1,
    $0.8 < a1 \leq 1.2$, $0.7 \leq x1 \leq 1.0$, $0 \leq y1 \leq 0.3$, $0 \leq z1 \leq 0.05$, $0 \leq c1 \leq 0.05$, and $0.99 \leq x1+y1+z1 \leq 1.01$, and
    $B^1$ being at least one element selected from among Ti, Mg, V, and Nb.

2. The positive electrode active material as claimed in claim 1, wherein the first coating part comprises lithium cobalt phosphate represented by $Li_mCoPO_4$, and wherein $0.8 \leq m \leq 1.2$.

3. The positive electrode active material as claimed in claim 2, wherein an amount of cobalt in the first particle is about 0.1 mol% to about 0.5 mol% based on a total mole of metals excluding lithium in the first particle.

4. The positive electrode active material as claimed in any one of claims 1 to 3, wherein the first particle further comprises a second coating part on the first coating part, and
    wherein the second coating part comprises carbon.

5. The positive electrode active material as claimed in claim 4, wherein an amount of carbon in the first particle is about 1.0 wt% to about 2.5 wt% based on a total weight of the first particle.

6. The positive electrode active material as claimed in any one of claims 1 to 5, wherein the first particle further comprises a surface coating layer on a surface of the first particle, and
    wherein the surface coating layer comprises at least one selected from among cobalt and carbon.

7. The positive electrode active material as claimed in any one of claims 1 to 6, wherein the first particle is a spherical secondary particle.

8. The positive electrode active material as claimed in any one of claims 1 to 7, wherein

    a first average particle diameter of the first particle is about 1 $\mu$m to about 20 $\mu$m, and
    an average size of the primary particles is about 100 nm to about 500 nm.

9. The positive electrode active material as claimed in any one of claims 1 to 8, wherein a porosity of the first particle is about 20% to about 40%.

10. The positive electrode active material as claimed in any one of claims 1 to 9, further comprising a second particle represented by Chemical Formula 2,

    Chemical Formula 2 $\quad\quad\quad\quad Li_{a2}Ni_{x2}Co_{y2}Mn_{z2}X_{c2}O_{2-b2}$

    wherein, in Chemical Formula 2,
    $0.8 \leq a2 \leq 1.2$, $0.5 \leq x2 < 1.0$, $0 < y2 \leq 0.3$, $0 \leq z2 \leq 0.2$, $0 \leq c2 \leq 0.05$, $0 \leq b2 \leq 0.05$, and $x2+y2+z2+c2=1$, and
    X is at least one element selected from among Al, Ti, Mg, Zr, Mo, and Nb.

11. The positive electrode active material as claimed in claim 10, wherein a mixing ratio of the first particle to the second particle is about 90:10 to about 50:50 by weight.

12. A method, comprising:

preparing a first preliminary particle that comprises a compound represented by Chemical Formula 1;
crushing the first preliminary particle;
mixing the crushed first preliminary particle and a coating material with each other to form a mixture, the coating material comprising a cobalt source;
drying the mixture; and
performing calcination on the mixture,

$$\text{Chemical Formula 1} \qquad Li_{a1}Fe_{x1}Mn_{y1}B^1_{z1}PO_{4-c1}$$

wherein, in Chemical Formula 1,
$0.8 < a1 \leq 1.2$, $0.7 \leq x1 \leq 1.0$, $0 \leq y1 \leq 0.3$, $0 \leq z1 \leq 0.05$, $0 \leq c1 \leq 0.05$, and $0.99 \leq x1+y1+z1 \leq 1.01$, and
$B^1$ is at least one element selected from among Ti, Mg, V, and Nb, and
wherein the method is a method of manufacturing a positive electrode active material.

13. The method as claimed in claim 12, wherein an amount of cobalt in the positive electrode active material is about 0.1 mol% to about 0.5 mol% based on a total mole of metals excluding lithium in the positive electrode active material.

14. The method as claimed in claim 12 or claim 13, wherein the coating material further comprises a carbon source.

15. The method as claimed in any one of claims 12 to 14, wherein the preparing of the first preliminary particle comprises:

mixing an iron phosphate precursor, a lithium source, and a carbon source with one another to form a preliminary mixture;
wet crushing the preliminary mixture;
drying the crushed preliminary mixture; and
performing calcination on the dried preliminary mixture.

# FIG. 1

# FIG. 2

# FIG. 3

EP 4 730 435 A1

# FIG. 4

# FIG. 5

# FIG. 6

# FIG. 7

PTC1

NNP

CTP1

GB

# FIG. 8

# FIG. 9

| | |
|---|---|
| Preparation of first preliminary particle | ～S100 |

↓

| | |
|---|---|
| Crushing | ～S200 |

↓

| | |
|---|---|
| Addition and mixing of coating material | ～S300 |

↓

| | |
|---|---|
| Drying | ～S400 |

↓

| | |
|---|---|
| Calcination | ～S500 |

Europäisches
Patentamt

European
Patent Office

Office européen
des brevets

# EUROPEAN SEARCH REPORT

**Application Number**

EP 25 20 5889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 498 162 A (ZHEJIANG GEPAI COBALT NEW MAT CO LTD) 20 December 2022 (2022-12-20) | 1,4,5, 7-9 | INV. H01M4/525 |
| A | * claim 1 * | 2,3,6, 10-15 | ADD. H01M4/131 H01M4/36 |
| A | CN 118 289 728 A (SHENZHEN XINMAO NEW ENERGY TECH CO LTD) 5 July 2024 (2024-07-05) * the whole document * | 1-15 | |

-----

-----

**TECHNICAL FIELDS SEARCHED (IPC)**

H01M

The present search report has been drawn up for all claims

| Place of search | Date of completion of the search | Examiner |
|---|---|---|
| Munich | 9 March 2026 | Radeck, Stephanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 5889

This annex lists the patent family members relating to the patent documents cited in  the above-mentioned European search report.
The members are as contained in the European Patent Office EDP file on
The European Patent Office is in no way liable for these particulars which are merely given for the purpose of information.

09-03-2026

| Patent document cited in search report | Publication date | Patent family member(s) | Publication date |
|---|---|---|---|
| CN 115498162 A | 20-12-2022 | NONE | |
| CN 118289728 A | 05-07-2024 | NONE | |

EPO FORM P0459

For more details about this annex : see Official Journal of the European Patent Office, No. 12/82